# EUROPÄISCHE PATENTSCHRIFT

(11) **EP 3 805 692 B1**
(45) Veröffentlichungstag und Bekanntmachung des Hinweises auf die Patenterteilung: **29.06.2022**
(21) Anmeldenummer: 19202554.2
(22) Anmeldetag: 10.10.2019
(51) Int. Cl.: G01B 5/00, B23Q 1/01, B23Q 1/03

(54) **MODULAR AUFGEBAUTES HALTE- UND FIXIERSYSTEM FÜR DIE MESSTECHNIK**
MODULAR HOLDING AND FIXING SYSTEM FOR MEASURING TECHNOLOGY
SYSTÈME DE MAINTIEN ET DE FIXATION MODULAIRE POUR UNE TECHNIQUE DE LA MESURE

(43) Veröffentlichungstag der Anmeldung: 14.04.2021
(73) Patentinhaber: OSP Präzisionsteile GmbH, 74382 Neckarwestheim (DE)
(72) Erfinder: Wirth, Armin, 74081 Heilbronn (DE)
(74) Vertreter: Staeger & Sperling Partnerschaftsgesellschaft mbB

(56) Entgegenhaltungen:
- WO-A1-02/055258
- WO-A1-02/068150
- DE-A1- 4 236 135
- DE-A1-102008 019 589

## Beschreibung

Die vorliegende Erfindung betrifft ein modular aufgebautes Halte- und Fixiersystem, ein modulares Haltesystem für die 3D-Messtechnik sowie einen Messtisch umfassend ein solches modulare Haltesystem.

Der Fachmann unterscheidet technologisch zwischen der Funktion "Spannen" und der Funktion "Halten" bzw. "Fixieren".

In modernen Bearbeitungszentren zur spanenden Bearbeitung von Werkstücken werden die Werkstücke üblicherweise in einem Spannsystem fest gespannt und dann im eingespannten Zustand spanend bearbeitet. Hierbei werden als Spannsystem oftmals Schraubstöcke eingesetzt, die beispielsweise eine mittige Festbacke und zwei außen liegende Spannbacken aufweisen, wobei die beiden Spannbacken von einer Spannspindel relativ zueinander verschoben werden können, um die Werkstücke zwischen den Spannbacken und der Festbacke zu spannen.

Bezüglich des Standes der Technik bezieht sich WO 02/055258 A1 auf eine Positioniereinrichtung für auf mehreren nebeneinander angeordneten Schienen angeordnete Werkstückträger. DE 42 36 135 A1 bezieht sich auf einen Prüfgutträger für 3D-Vermessungsmaschinen und Messtische. WO 02/068150 A1 bezieht sich auf einen Werkstückspanntisch mit Schlitten, die als Spannelemente ausgebildet sind und die in Reihe auf einer Führungsbahn angeordnet sind.

Aus der DE 102008019589 ist ein Mehrfachspanner bekannt, der auf dem Grundkörper mehrere voneinander beabstandete Festbacken mit einer festen Anlagefläche für die zu spannenden Werkstücke befestigt. Die festen Anschlagflächen können somit auch bei einer Umstellung der Verstellbacken an einer festen Position verbleiben, so dass keine Nachjustierung der Spannnullpunkte erforderlich ist. Die Verstellbackenkörper sind dagegen getrennt von den Festbacken an einer im Grundkörper verstellbar angeordneten Basisschiene befestigt. Eine Umstellung der Verstellbacken kann somit ohne Veränderung der festen Anschlagflächen erfolgen, wobei durch die im Grundkörper verstellbar angeordnete Basisschiene eine gemeinsame Schnellverstellung der Verstellbacken zur Vorpositionierung ermöglicht wird. Bei solchen Systemen muss die Vorrichtung so ausgebildet sein, dass eine spanende Werkstückbearbeitung möglich ist und dabei eine bestimmte Klemmkraft gegeben sein muss, um ein Werkstück ausreichend fest spannen zu können.

Bei Messvorrichtungen und Nullpunktmessystemen liegt eine andere Aufgabe zu Grunde, so dass diese mit herkömmlichen Spannsystemen nicht zufriedenstellend gelöst werden kann. Besteht die Aufgabe darin ein Werkstück oder gar eine Anzahl von Wiederholteilen messtechnisch in ihren geometrischen Abmessungen zu erfassen, fehlt es im Stand der Technik an geeigneten Systemen. Zunächst soll das Werkstück von einer Werkstückaufnahme lediglich gehalten werden, so dass ein Messssystem an das Werkstück zur geometrischen Vermessung heran geführt werden kann. Es soll aber gerade kein Verspannen oder Einspannen sondern nur ein Halten bzw. Fixieren realisiert werden.

Eine weitere Aufgabe besteht in der effizienten Erfassung der Abmessungen von Wiederholteilen oder Serienteilen, ohne den Aufwand des Einrichtens eines jeden Teiles in einer Haltevorrichtung. Insbesondere bei klassischen Nullpunktsystemen entsteht zum Erhalt des korrekten messtechnischen Referenzpunktes dann ein erheblicher Montage und Justageaufwand.

Eine wesentliche Aufgabe der vorliegenden Erfindung besteht darin, dass eine vielfältige Anwendbarkeit zur Lösung messtechnischer Aufgaben gegeben sein soll und dass Teile unterschiedlichster Geometrie und Abmessung vermessen werden können. Dazu bedarf es im Stand der Technik aber jeweils individueller Aufnahmen und Lösungen, die die Messaufgabe insgesamt aufwändig und teuer machen. Es Besteht daher ein Bedarf nach einer flexibel einsetzbaren Lösung, welche schnell und kostengünstig umrüstbar ist und universell erweitert werden kann und für Serienteile, wie auch Einzelteile eine effiziente Messaufnahme darstellt.

Diese Aufgabe wird durch die Merkmalskombination gemäß Anspruch 1 gelöst.

Erfindungsgemäß ist daher ein modular aufgebautes Halte- und Fixiersystem vorgesehen, umfassend eine Mehrzahl an im Wesentlichen identisch ausgebildeten vereinzelten Rasterschienen, welche jeweils eine zentrale, entlang der Rasterschiene verlaufende Führungsnut der definierten Breite Y sowie wenigstens zwei, vorzugsweise vier Spannnuten aufweisen, die parallel zu den Führungsnuten verlaufen, wobei die Rasterschienen in einem festen Nullpunktraster mit dem Rastermaß X zueinander in einem äquidistanten

Abstand Y in jeweils paralleler Anordnung auf einer Montageebene bzw. einem Messtisch befestigbar sind. Die vereinzelte Ausführung hat gegenüber einer einstückigen Ausbildung den Vorteil, dass diese nicht nur materialsparend ist, sondern auch ein frei skalierbares System realisierbar ist.

Ferner ist eine Mehrzahl an modular aufgebauten Haltesystemen zum Halten eines oder mehrerer Werkstücke vorgesehen, die mit jeweils einer universellen Sockelplatte zur wahlweise Montage des bzw. der Haltesysteme in jeweils einer in eine Führungsnut eingeschobenen Position oder einer in eine in einen Zwischenraum zwischen je zwei unmittelbar benachbarten Rasterschienen eingeschobenen Position. Die Ratserschienen bilden in ihrer Montageposition daher sowohl in den Rasterschienen integrierte Führungsaufnahmen für die Haltesysteme aus, als auch dazwischen, indem zwei direkt benachbarte, d. h unmittelbar nebeneinander montierte Rasterschienen mit ihren der jeweils benachbarten Rasterschiene zuweisenden Kontur eine zur integrierten Führungsaufnahme vergleichbare Führungsaufnahme bildet. In einer weiter vorteilhaften Ausgestaltung der Erfindung ist vorgesehen, dass die Rasterschienen einen im wesentlich U-förmigen Querschnitt aufweisen, wobei der in der Rasterschiene integrieret Führungskanal bzw. die integrierte Führungsnut bevorzugt stirnseitig offen ausgebildet ist, so dass eine Einführung der Sockelplatten der Haltesysteme von der Stirnseite her auf einfache Weise erfolgen kann. Die u-förmige Ausprägung besitzt zwei vertikal verlaufenden außenliegenden Seitenflächen und zwei vertikal verlaufenden, die integrierte Führungsnut vertikal seitlich begrenzender Seitenflächen. Ferner sind eine untere Auflagefläche, die Sockelfläche der Führungsnut sowie zwei Oberseiten (die neben der Führungsnut ausgebildet sind) der jeweiligen Rasterschiene horizontal orientiert, wobei jeweils eine vollständig entlang der Rasterschienen verlaufende Spannnut sowohl in den innenliegenden als auch den außenliegenden Seitenflächen zur Aufnahme eines sockelplattenseitig entsprechend ausgebildeten Spannrippe vorgesehen sind.

In einer weiteren vorteilhaften Ausgestaltung der Erfindung ist vorgesehen, dass die jeweilige Sockelplatte an ihrer Unterseite einen aus der Unterseite hervorstehenden Steg der gleichen Breite Y aufweist (analog der gewählten Breite der Führungsnut) und auch der Abstand der beiden außenliegenden Seitenflächen zwischen zwei benachbarten Rasterschienen). Demnach besitzt die Sockelplatte zwei den Steg begrenzende Stufen.

Ebenfalls von Vorteil ist es, wenn an dem jeweiligen aus der Sockelplatte hervorstehenden Steg eine oder zwei quer zu dem Steg verlaufende Spannleisten vorgesehen sind, die jeweils endseitig über die Breite des Stegs hinausragende Spannrippen ausbilden, die zum Eingriff in jeweils eine Spannnut an den innenliegenden oder außenliegenden Seitenflächen ausgeführt ist. Die Positionierung der Spannnuten und der Spannrippen ist dabei korrespondierend gewählt, um einen Montagezustand zu erreichen bei dem die jeweilige Unterseite der Sockelplatte neben dem Steg auf der jeweiligen Oberseite der Rasterschienen im montierten Zustand aufliegt.

Es ist weiter mit Vorteil vorgesehen, dass die Rasterschienen im Abstand Z zu wenigstens einer Stirnseite der betreffenden Rasterschiene jeweils vier seitliche Ausnehmungen in jeweils einem Bereich oberhalb der vier Spannnuten aufweist, die derart ausgebildet sind, dass die Sockelplatte von oben mit einer ihrer Spannleisten wahlweise in eine Führungsnut oder in einen Zwischenraum zwischen je zwei unmittelbar benachbarte Rasterschienen eingeführt werden kann. Demzufolge sind die Ausnehmungen vorzugsweise alle fluchtend in einer Reihe in den nebeneinander montierten Rasterschienen angeordnet. Besonders vorteilhaft ist es, wenn die Ausnehmungen ebenfalls im Abstand des Rastermaßes X zur Stirnseite in Rasterschienen angebracht sind.

In einer ebenfalls bevorzugten Ausgestaltung der Erfindung ist vorgesehen, dass jede Rasterschiene jeweils beidseitig der Führungsnut eine Vielzahl im Rastermaß X eingebrachter Positionieröffnungen aufweist und hierzu jede Sockelplatte wenigstens einen im korrespondierenden Randbereich angeordneten Positionierstift aufweist, der ausgebildet ist, zum Eingriff in eine der Positionieröffnungen.

Besonders vorteilhaft ist daher eine Ausführung, bei der die jeweiligen Haltesysteme linearbeweglich entlang den Rasterschienen mit ihrer Sockelplatte in einer ihrer in oder zwischen entsprechende Rasterschienen eingeführte Montageposition verschiebbar sind und zwar alternierend abwechselnd von jeweils einer festen Raststellung innerhalb des vorgegebenen Nullpunktrasters in jeweils eine dazwischen kontinuierlich frei wählbare Position.

Mit Vorteil ist weiter vorgesehen, dass jede Sockelplatte über wenigstens eine, vorzugsweise zwei zentrale Spannschrauben verfügt, welche derart angeordnet sind, um gegen oder in korrespondierende Öffnungen in der Sockelfläche der Führungsnut betätigt zu werden, um dadurch das betreffende Haltesysteme in seiner Montageposition Positionsfest zu spannen. Dies kann in einer Rastposition oder einer Zwischenposition erfolgen.

Es ist weiter von Vorteil, wenn an der Sockelplatte ein aufsteckbares in seiner Winkelposition feststellbares Drehgelenk mit einer Aufnahme an einer für eine Werkstückhalteeinrichtung ausgebildete Schnittstelle montiert ist, wobei die Positionen der Schnittstellen von jeweils einer Mehrzahl von montierten Haltesystemen eine zur Oberfläche der Montageebene der Rasterschienen parallele Referenzebene aufspannt. Somit können z. B. eine Mehrzahl an Haltesystemen vormontiert werden oder wahlweise geeignete oder benötigte individuelle Werkstückhalteeinrichtung in einer gewünschten Winkelposition in einfacher Weise schnell und austauschbar montiert werden.

In einer anderen bevorzugten Ausführungsform der Erfindung ist vorgesehen, dass zur Befestigung der Werkstückhalteeinrichtung jeweils ein universeller Montageadapter zur Einsteckmontage in die Aufnahme des Drehgelenks vorgesehen ist, wobei der Montageadapter vorzugsweise über einen in die Aufnahme hineinragenden Zugbolzen verfügt, um diesen am Zugbolzen über eine am Drehgelenk vorgesehen Klemmschraube zu fixieren.

Ein weiterer Vorteil wird dadurch erzielt, dass der Montageadapter kopfseitig über einen Befestigungsflansch zur lösbaren Befestigung einer Werkstückhalteeinrichtung verfügt, die z. B. über hin- und her bewegliche Haltebacken verfügt, um dazwischen ein Werkstückteil zu halten. Auf diese Weise lassen sich diverse Werkstückhalteeinrichtungen vormontiert mit je einem Montageadapter aussatten, die mit dem jeweiligen Befestigungsflansch am Adapter befestigt sind. Dann kann die so ausgebildete Werkstückhalteeinrichtung mit dem steckseitig hervorstehenden Zugbolzen die Aufnahme am Drehgelenk ohne großen Montageaufwand bei insgesamt hoher Positionsgenauigkeit eingesteckt werden.

Auf diese Weise erhält man ein System mit sehr hoher und dauerhafter Positionsgenauigkeit bei dennoch flexibler Montage und Demontage von Haltesystemen.

Ein weiterer Aspekt der vorliegenden Erfindung betrifft einen Messtisch aufweisend ein wie zuvor beschriebenes modular aufgebautes Halte- und Fixiersystem. Besonders bevorzugt sind dabei Messtische aus Stein, Granit oder einem massiven schweren Grundkörper.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: eine Aufsicht auf eine einzelne Rasterschiene;
- Fig. 2: eine Schnittansicht durch eine Rasterschiene gemäß Figur 1;
- Fig. 3: eine perspektivische Anordnung eines modular aufgebauten Halte- und Fixiersystems mit Rasterschienen und vier beispielhaft montierten Haltesystemen;
- Fig. 4: ein Ausführungsbeispiel eines erfindungsgemäßen Haltesystems;
- Fig. 5: eine Explosionsdarstellung des Haltesystems nach Figur 4;
- Fig. 6: eine perspektivische Ansicht der Sockelplatte eines Haltesystems und
- Fig. 7: eine Seitenansicht und der Sockelplatte aus Figur 6,
- Fig. 8: eine Unteransicht der Figur 7,
- Fig. 9: ein alternatives Ausführungsbeispiel eines erfindungsgemäßen Haltesystems und
- Fig. 10: eine Explosionsdarstellung des Haltesystems nach Figur 9.

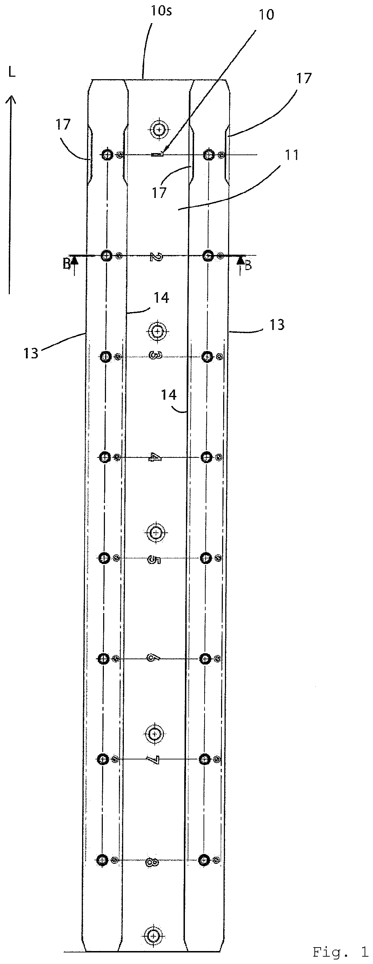

Im Folgenden wird die Erfindung anhand eines Ausführungsbeispiels mit Bezug auf die Figuren 1 bis 7 näher beschrieben, wobei gleiche Bezugszeichen auf gleiche strukturelle und/oder funktionale Merkmale hinweisen.

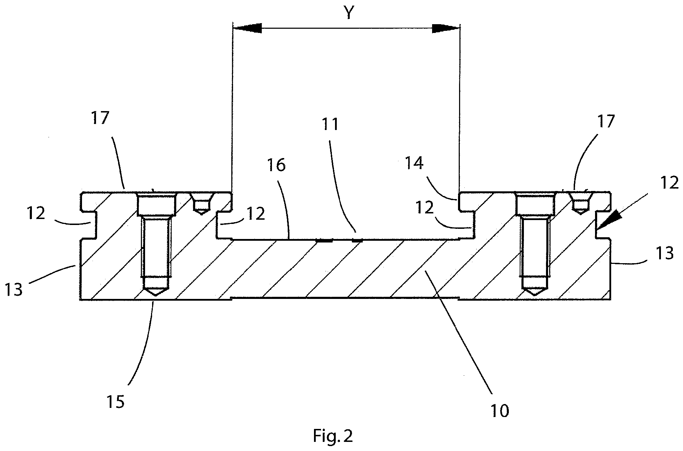

In den Figuren 1 und 2 sind eine Aufsicht auf und eine Schnittansicht durch eine einzelne Rasterschiene 10 gezeigt. Die Rasterschiene 10 erstreckt sich linear entlang der Erstreckungsrichtung L. Die Rasterschiene 10 besitzt einen, wie in Fig. 2 ersichtlich, im wesentlich U-förmigen Querschnitt aufgrund der mittig integrierten Führungsnut 11.

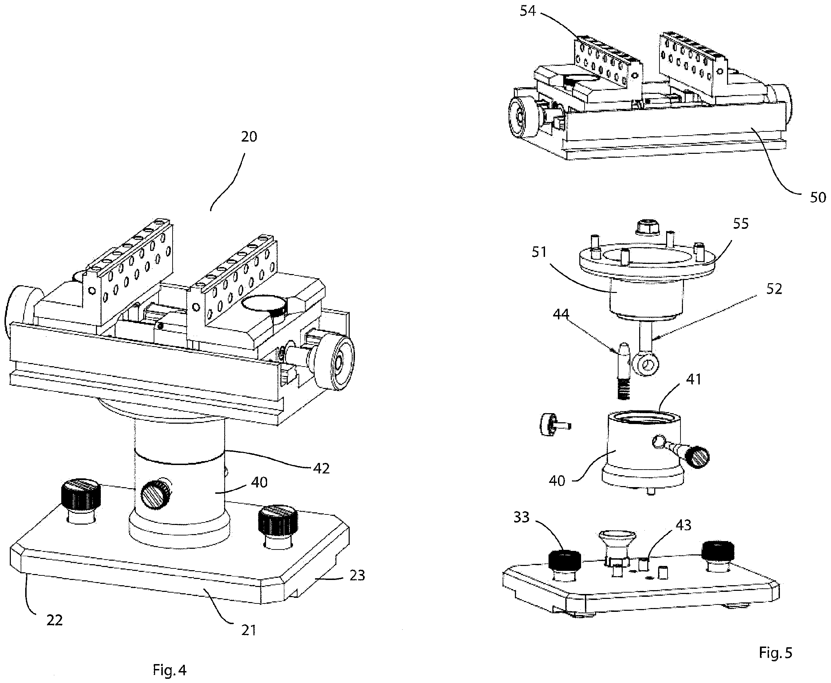

Ferner sind vertikal verlaufende außenliegenden Seitenflächen 13 vorhanden sowie zwei vertikal verlaufenden, die zentral angeordnete Führungsnut 11 besitzt zwei seitlich begrenzende (innenliegende) Seitenflächen 14, jeweils links und rechts. Die Unterseite der Rasterschiene 10 stellt eine untere Auflagefläche 15 bereits, die zur Auflage auf einem flachen Messtisch eben ausgebildet ist. Ferner besitzt die Rasterschiene 10 eine Sockelfläche 16 innerhalb der Führungsnut 11, die um 90° verdreht zu den vertikal orientierten Seitenflächen 13, 14 orientiert ist. Die zwei Oberseiten 17 der jeweiligen Rasterschiene 10 verlaufen horizontal und damit parallel zur Unterseite, wobei jeweils eine vollständig entlang der Rasterschienen 10 verlaufende Spannnut 12 sowohl in den innenliegenden als auch den außenliegenden Seitenflächen 13, 14 (jeweils in gleicher Höhe) zur Aufnahme einer sockelplattenseitig entsprechend ausgebildeten Spannrippe 26 vorgesehen sind. Die korrespondierenden Spannrippen werden im Zusammenhang mit den Figuren 5 bis 8 näher erläutert.

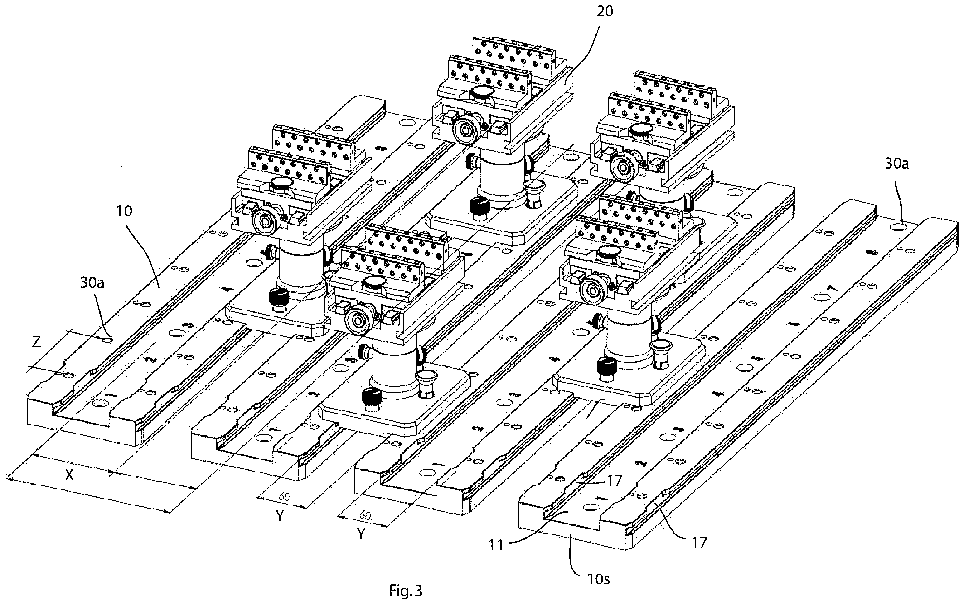

Die Fig. 3 zeigt eine perspektivische Anordnung eines modular aufgebauten Halte- und Fixiersystem 1 umfassend vier Rasterschienen 10 mit vier beispielhaft montierten Haltesystemen 20. Selbstverständlich kann eine größere Anzahl an Rasterschienen 10 und Haltesystemen 20 für das modular aufgebaute Halte- und Fixiersystem 1 vorgesehen werden. Als Rastermaß X sind hier lediglich beispielhaft 100 mm vorgesehen. Die Breite Y der Führungsnut beträgt 60 mm. Ebenfalls ist erkennbar, dass die Rasterschienen 10 eine solche Breite aufweisen, dass diese in einer im 2-fachen Rastermaß = 2X montierten Position wiederum einen Abstand Y von 60 mm aufweisen. Demzufolge können die Haltesystemen 20, wie gezeigt, zwischen zwei Rasterschienen 10 oder in der Führungsnut 11 montiert werden.

Es ist weiter in der Figur 3 zu erkennen, dass die Rasterschienen 10 im Abstand Z = X an der in der Bildebene vorderen Stirnseite 10s der betreffenden Rasterschienen 10 jeweils vier seitliche Ausnehmungen 17 in jeweils einem Bereich oberhalb der vier Spannnuten 12 aufweisen, die derart ausgebildet sind, dass die Sockelplatte 21 der Haltesysteme 20 von oben mit einer ihrer Spannleisten 25 in den Bereich zwischen den Ausnehmungen eingeführt werden können und zwar wahlweise in eine Führungsnut 11 oder alternativ in einen Zwischenraum zwischen je zwei unmittelbar benachbarte Rasterschienen 10. Im Vormontagezustand eines Haltesysteme 20 ist zunächst nur ein Paar der an der Sockelplatte 21 vorgesehenen Spannrippen 26 mit jeweils einer linken und rechten Spannnut 12 an den betroffenen Rasterschienen 10 im Eingriff und ein Verkanten wird durch das zunächst frei liegende Paar an Spannrippen 26 verhindert werden. Danach kann das Haltesysteme 20 weiter entlang der Erstreckungsrichtung eingeschoben werden bis das zweite Paar der vorhandene Spannrippen 26 an der Sockelplatte mit jeweils der linken und rechten Spannnut 12 in Eingriff kommt. Ab diesem Moment wird wiederum ein Verkanten des Haltesystems 20 durch einen Monteur sicher verhindert und lässt sich das Haltesystem 20 nur noch bestimmungsgemäß entlang seiner Führung bewegen bzw. in eine Rastposition einrasten.

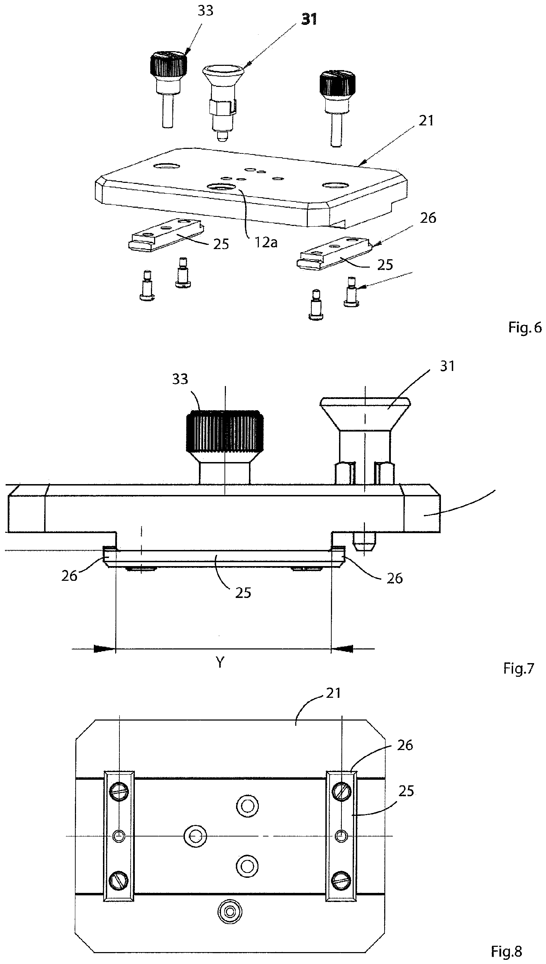

Die Figuren 4 und 5 zeigen jeweils eine Zusammenbausituation und eine Explosionsdarstellung des Haltesystems 20 nach Figur 4. Das Haltesystem 20 hat ebenfalls einen modularen Aufbau mit einem Schnellverbindungssystem an der Schnittstelle 42. Zunächst wird die Sockelplatte 21 mit Bezug auf die Figuren 6 und 7 beschrieben. Die jeweilige rechteckig geformte Sockelplatte 21 besitzt an ihrer Unterseite 22 einen aus der Unterseite 22 hervorstehenden Steg 23 der Breite Y (in diesem Ausführungsbeispiel wieder 60 mm), der sich über die gesamte Länge der Sockelplatte 21 hinaus erstreckt.

In der Sockelplatte sind Öffnungen zur Aufnahme von zwei Spannschrauben 33 und einen Positionierstift 31 im seitlichen Randbereich.

Aufgrund des Stegs 23 verfügt die Sockelplatte über zwei Stufen 24 zwischen dem Steg 23 und der Unterseite 22 und es ergeben sich zwei Randbereiche daneben.

Die Spannschrauben 33 sind derart im zentralen Bereich in etwa auf der Längsmittelachse angeordnet, um gegen oder in korrespondierende Öffnungen in der Sockelfläche 16 der Führungsnut 11 betätigt zu werden, um dadurch das betreffende Haltesysteme 20 in seiner Montageposition Positionsfest zu spannen. Jede Rasterschiene 10 besitzt jeweils beidseitig der Führungsnut 11 eine Vielzahl im Rastermaß X eingebrachte Positionieröffnungen 30a, wie dies gut in den Figuren 1 und 3 zu erkennen ist. Entsprechend weist hierzu jede Sockelplatte 21 wenigstens den zuvor genannten im korrespondierenden Randbereich 12a angeordneten Positionierstift 31 auf, der ausgebildet ist, zum Eingriff in eine der Positionieröffnungen 30a.

An dem jeweiligen Steg 23 der Sockelplatte 21 sind zwei quer zu dem Steg 23 angeordnete, lösbar verschraubte Spannleisten 25 vorgesehen, die jeweils endseitig (wie in der Schnittansicht der Figur erkennbar) über die Breite Y des Stegs hinausragende Spannrippen 26 ausbilden, somit jeweils ein Paar an Spannrippen 26, die zum Eingriff in jeweils eine Spannnut 12 an den innenliegenden oder außenliegenden Seitenflächen 13, 14 der Rasterschienen 10 vorgesehen sind.

An der Sockelplatte 21 ist ferner in Fig. 5 ein mittels Bolzenverbindung dreier Stiftbolzen 43 aufsteckbares in seiner Winkelposition feststellbares Drehgelenk 40 mit einer Aufnahme 41 an einer für eine Werkstückhalteeinrichtung 50 ausgebildete Schnittstelle 42 montiert. Die jeweiligen Positionen der Schnittstellen 42 von jeweils einer Mehrzahl von montierten Haltesystemen 20 spannen eine zur Oberfläche der Montageebene der Rasterschienen 10 gemeinsame und parallele Referenzebene auf, wie dies in der Fig. 3 erkennbar ist. Das Drehgelenk besitzt einen Positionierstift 44 um z. B eine feste Drehwinkelstellung zu fixieren. In die Aufnahme 41 wird ein mit einem gegengelenk ausgebildeter Montageadapter 51 eingeführt. Der Montageadapter 51 ist bestimmungsgemäß zur Einsteck- bzw. Aufsteckmontage in die Aufnahme 41 des Drehgelenks 40 ausgebildet, wobei der Montageadapter 51 ergänzend über einen in die Aufnahme 41 hineinragenden Zugbolzen 52 verfügt, um diesen am Zugbolzen 52 über eine am Drehgelenk vorgesehen Klemmschraube 42 zu fixieren.

Der Montageadapter 51 besitzt kopfseitig einen Befestigungsflansch 53 zur lösbaren Befestigung einer Werkstückhalteeinrichtung 50, die über hin- und her bewegliche Haltebacken 54 verfügt, um dazwischen ein Werkstückteil zu halten.

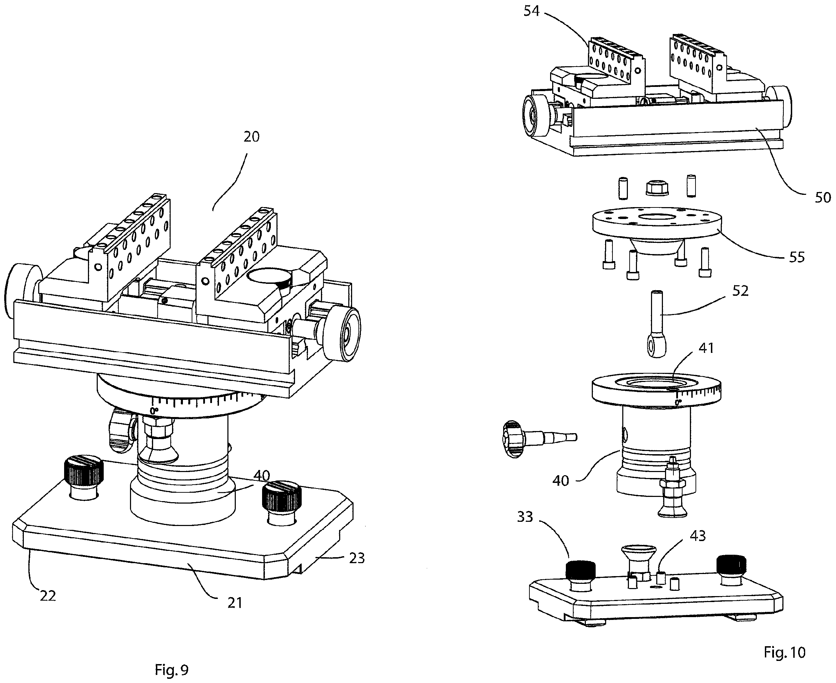

In den Figuren 9 und 10 wird ein zu den Figuren 4 und 5 alternatives Ausführungsbeispiel gezeigt. Die Figuren 9 und 10 zeigen dazu jeweils eine Zusammenbausituation und eine Explosionsdarstellung. Das Haltesystem 20 hat ebenfalls einen modularen Aufbau mit einem Schnellverbindungssystem, wobei eine Verbindung zwischen dem Zugbolzen 52 und der seitlich dargestellten Klemmschraube erfolgt. Soweit die Bezugszeichen mit den Figuren 4 und 5 übereinstimmen, handelt es sich um baulich funktional gleiche Bereiche oder Elemente. Das Haltesystem 20 nach dieser Ausführungsform kann ebenfalls um 360° gedreht werden und es gibt 4 um 90° versetzte fixe Rastpositionen, während sich auch jede dazwischen liegende Position einstellen lässt, nämlich über ein Klemmprinzip statt einem Rastprinzip.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Modular aufgebautes Halte- und Fixiersystem (1) für die Messtechnik umfassend eine Mehrzahl an identisch ausgebildeten vereinzelten Rasterschienen (10), welche jeweils eine zentrale, entlang der Rasterschiene (10) verlaufende Führungsnut (11) der Breite Y sowie wenigstens zwei Spannnuten (12) aufweisen, die parallel zu den Führungsnuten (11) verlaufen, wobei die Rasterschienen (10) in einem festen Nullpunktraster mit dem Rastermaß X zueinander in einem äquidistanten Abstand Y in jeweils paralleler Anordnung auf einem Messtisch (100) befestigbar sind, sowie eine Mehrzahl an modular aufgebauten Haltesystemen (20) zum Halten eines oder mehrerer Werkstücke, die mit jeweils einer vorzugsweise universellen Sockelplatte (21) zur wahlweise Montage des bzw. der Haltesysteme (20) in jeweils einer in eine Führungsnut (11) eingeschobenen Position oder einer in eine in einen Zwischenraum zwischen je zwei unmittelbar benachbarten Rasterschienen (10) eingeschobenen Position.

2. Modular aufgebautes Halte- und Fixiersystem (1) nach Anspruch 1, **dadurch gekennzeichnet, dass** die Rasterschienen (10) im wesentlich einen U-förmigen Querschnitt aufweisen, mit zwei vertikal verlaufenden außenliegenden Seitenflächen (13) und zwei vertikal verlaufenden, die Führungsnut (11) seitlich begrenzenden Seitenflächen (14), während eine untere Auflagefläche (15), eine Sockelfläche (16) der Führungsnut (11) sowie zwei Oberseiten (17) der jeweiligen Rasterschiene (10) horizontal verlaufen, wobei jeweils eine vollständig entlang der Rasterschienen (10) verlaufende Spannnut (12) in den innenliegenden und außenliegenden Seitenflächen (13, 14) zur Aufnahme eines sockelplattenseitig entsprechend ausgebildeten Spannrippe (26) vorgesehen sind.

3. Modular aufgebautes Halte- und Fixiersystem (1) nach Anspruch 1 oder 2, **dadurch gekennzeichnet, dass** die jeweilige Sockelplatte (21) an ihrer Unterseite (22) einen aus der Unterseite (22) hervorstehenden Steg (23) der Breite Y aufweist, so dass die Sockelplatte zwei Stufen (24) zwischen dem Steg (23) und der Unterseite (22) ausbildet.

4. Modular aufgebautes Halte- und Fixiersystem (1) nach Anspruch 3, **dadurch gekennzeichnet, dass** an dem jeweiligen Steg (23) der Sockelplatte (21) eine oder zwei quer zu dem Steg (23) verlaufenden Spannleisten (25) vorgesehen sind, die jeweils endseitig über die Breite des Stegs hinausragende Spannrippen (26) ausbilden, die zum Eingriff in jeweils eine Spannnut (12) an den innenliegenden oder außenliegenden Seitenflächen (13, 14) ausgeführt ist.

5. Modular aufgebautes Halte- und Fixiersystem (1) nach Anspruch 3, **dadurch gekennzeichnet, dass** die Rasterschienen (10) im Abstand Z zu wenigstens einer Stirnseite (10s) der betreffenden Rasterschiene jeweils vier seitliche Ausnehmungen (17) in jeweils einem Bereich oberhalb der vier Spannnuten (12) aufweist, die derart ausgebildet sind, dass die Sockelplatte (21) von oben mit einer ihrer Spannleisten (25) wahlweise in eine Führungsnut (11) oder in einen Zwischenraum zwischen je zwei unmittelbar benachbarte Rasterschienen (10) eingeführt werden kann.

6. Modular aufgebautes Halte- und Fixiersystem (1) nach einem der vorhergehenden Ansprüche, **dadurch gekennzeichnet, dass** jede Rasterschiene (10) jeweils beidseitig der Führungsnut (11) eine Vielzahl im Rastermaß X eingebrachte Positionieröffnungen (30a) aufweist und hierzu jede Sockelplatte (21) wenigstens einen im korrespondierenden Randbereich (12a) angeordneten Positionierstift (30) aufweist, der ausgebildet ist, zum Eingriff in eine der Positionieröffnungen (30a).

7. Modular aufgebautes Halte- und Fixiersystem (1) nach einem der vorhergehenden Ansprüche, **dadurch gekennzeichnet, dass** die jeweiligen Haltesysteme (20) linearbeweglich entlang den Rasterschienen (10) mit ihrer Sockelplatte (16) in einer ihrer in oder zwischen entsprechende Rasterschienen (10) eingeführte Montageposition verschiebbar sind und zwar alternierend abwechselnd von jeweils einer festen Raststellung innerhalb des vorgegebenen Nullpunktrasters in jeweils eine dazwischen frei wählbare Position.

8. Modular aufgebautes Halte- und Fixiersystem (1) nach einem der vorhergehenden Ansprüche, **dadurch gekennzeichnet, dass** jede Sockelplatte (21) über wenigstens eine, vorzugsweise zwei zentrale Spannschrauben (33) verfügt, welche derart angeordnet sind, um gegen oder in korrespondierende Öffnungen in der Sockelfläche (16) der Führungsnut (11) betätigt zu werden, um dadurch das betreffende Haltesysteme (20) in seiner Montageposition Positionsfest zu spannen.

9. Modular aufgebautes Halte- und Fixiersystem (1) nach einem der vorhergehenden Ansprüche, **dadurch gekennzeichnet, dass** an der Sockelplatte (21) ein aufsteckbares in seiner Winkelposition feststellbares Drehgelenk (40) mit einer Aufnahme (41) an einer für eine Werkstückhalteeinrichtung (50) ausgebildete Schnittstelle (42) montiert ist, wobei die Positionen der Schnittstellen (42) von jeweils einer Mehrzahl von montierten Haltesystemen (20) eine zur Oberfläche der Montageebene der Rasterschienen (10) parallele Referenzebene aufspannt.

10. Modular aufgebautes Halte- und Fixiersystem (1) nach Anspruch 9, **dadurch gekennzeichnet, dass** zur Befestigung der Werkstückhalteeinrichtung (50) jeweils ein Montageadapter (51) zur Einsteckmontage in die Aufnahme (41) des Drehgelenks (40) vorgesehen ist, wobei der Montageadapter (51) vorzugsweise über einen in die Aufnahme (41) hineinragenden Zugbolzen (52) verfügt, um diesen am Zugbolzen (52) über eine am Drehgelenk vorgesehen Klemmschraube (42) zu fixieren.

11. Modular aufgebautes Halte- und Fixiersystem (1) nach Anspruch 10, **dadurch gekennzeichnet, dass** der Montageadapter (51) kopfseitig über einen Befestigungsflansch (55) zur lösbaren Befestigung einer Werkstückhalteeinrichtung (50), die über hin- und her bewegliche Haltebacken verfügt, um dazwischen ein Werkstückteil zu halten.

12. Messtisch (100) aufweisend ein modular aufgebautes Halte- und Fixiersystem (1) gemäß einem der Ansprüche 1 bis 11.

## Claims

1. A modularly constructed holding and fixing system (1) for instrumentation technology, comprising a plurality of identically designed individual grid rails (10), each of which has a central guide groove (11) of width Y that extends along the grid rail (10) and at least two clamping grooves (12) that extend parallel to the guide grooves (11), wherein the grid rails (10) can be respectively fastened to a measuring table (100) in a fixed zero-point grid with grid dimension X at an equidistant distance Y from one another in parallel arrangement, as well as a plurality of modularly constructed holding systems (20) for holding one or more workpieces, each with a preferably universal base plate (21) for selectively mounting the holding system(s) (20) in a position inserted into a guide groove (11) or in a position inserted into an interspace between two immediately adjacent grid rails (10).

2. The modularly constructed holding and fixing system (1) as set forth in claim 1, **characterized in that** the grid rails (10) have a substantially U-shaped cross section, with two vertically extending outer side surfaces (13) and two vertically extending side surfaces (14) that delimit the guide groove (11) laterally, whereas a lower support surface (15), a base surface (16) of the guide groove (11), and two upper sides (17) of the respective grid rail (10) extend horizontally, wherein a clamping groove (12) that extends completely along the grid rails (10) is respectively provided in the inner and outer side surfaces (13, 14) for the purpose of receiving a clamping rib (26) that is correspondingly embodied on the base plate side.

3. The modularly constructed holding and fixing system (1) as set forth in claim 1 or 2, **characterized in that** the respective base plate (21) has on its bottom side (22) a web (23) of width Y that protrudes from the bottom side (22), so that the base plate forms two steps (24) between the web (23) and the bottom side (22).

4. The modularly constructed holding and fixing system (1) as set forth in claim 3, **characterized in that** one or two clamping strips (25) that extend transversely to the web (23) are provided on the respective web (23) of the base plate (21) and respectively form clamping ribs (26) at their ends which project beyond the width of the web and are designed to engage in a respective clamping groove (12) on the inner or outer side surfaces (13, 14).

5. The modularly constructed holding and fixing system (1) as set forth in claim 3, **characterized in that** the grid rails (10) each have four lateral recesses (17) at a distance Z from at least one end face (10s) of the relevant grid rail in a respective region above the four clamping grooves (12), which clamping grooves (12) are embodied such that the base plate (21) can be optionally inserted from above with one of its clamping strips (25) either into a guide groove (11) or into an interspace between two immediately adjacent raster rails (10).

6. The modularly constructed holding and fixing system (1) as set forth in one of the preceding claims, **characterized in that** each grid rail (10) has a plurality of positioning openings (30a) on both sides of the guide groove (11) that are disposed in grid dimension X, and each base plate (21) has at least one positioning pin (30) for this purpose which is arranged in the corresponding edge region (12a) and designed to engage in one of the positioning openings (30a).

7. The modularly constructed holding and fixing system (1) as set forth in one of the preceding claims, **characterized in that** the respective holding systems (20) can be displaced linearly along the grid rails (10) with their base plate (16) in a mounting position introduced in or between corresponding grid rails (10), particularly so as to alternate between a fixed locking position within the specified zero-point grid and a freely selectable position therebetween.

8. The modularly constructed holding and fixing system (1) as set forth in one of the preceding claims, **characterized in that** each base plate (21) has at least one, preferably two, central clamping screws (33) which are arranged such that they can be pressed against or into corresponding openings in the base surface (16) of the guide groove (11) in order to thereby clamp the relevant holding system (20) securely in its mounting position.

9. The modularly constructed holding and fixing system (1) as set forth in one of the preceding claims, **characterized in that** an attachable pivot joint (40) that can be fixed in its angular position is mounted on the base plate (21) and has a receptacle (41) at an interface (42) that is designed for a workpiece holding device (50), wherein the positions of the interfaces (42) of each of a plurality of mounted holding systems (20) spans a reference plane that is parallel to the surface of the mounting plane of the grid rails (10).

10. The modularly constructed holding and fixing system (1) as set forth in claim 9, **characterized in that** a respective mounting adapter (51) for insertion mounting into the receptacle (41) of the pivot joint (40) is provided for fastening the workpiece holding device (50), the mounting adapter (51) preferably having a tie bolt (52) that protrudes into the receptacle (41) in order to fix it to the tie bolt (52) via a clamping screw (42) that is provided at the swivel joint.

11. The modularly constructed holding and fixing system (1) as set forth in claim 10, **characterized in that** the mounting adapter (51) has a fastening flange (55) on its top side for detachable fastening of a workpiece holding device (50), which has holding jaws that can be moved back and forth in order to hold a workpiece part.

12. A measuring table (100) having a modularly constructed holding and fixing system (1) as set forth in one of claims 1 to 11.

## Revendications

1. Système de maintien et de fixation de conception modulaire (1) pour la technique de mesure, comprenant une pluralité de rails modulaires (10) séparés, réalisés de manière identique, qui présentent respectivement une rainure de guidage centrale (12) d'une largeur Y s'étendant le long du rail modulaire (10) ainsi qu'au moins deux rainures de serrage (12) qui s'étendent en parallèle aux rainures de guidage (11), les rails modulaires (10) pouvant être fixés selon une trame point zéro fixe en dimensions modulaires X à une distance équidistante Y les uns par rapport aux autres dans une disposition respectivement parallèle sur une table de mesure (100), ainsi qu'une pluralité de systèmes de maintien (20) à structure modulaire servant à maintenir une ou plusieurs pièces qui se trouve(nt) respectivement dans une plaque de base (21), de préférence universelle, servant au montage sélectif du ou des systèmes de maintien (20) dans respectivement une position insérée dans une rainure de guidage (11) ou une position insérée dans un intervalle entre respectivement deux rails modulaires (10) directement adjacents.

2. Système de maintien et de fixation de conception modulaire (1) selon la revendication 1, **caractérisé en ce que** les rails modulaires (10) présentent substantiellement une section transversale en forme de U comprenant deux surfaces latérales situées à l'extérieur (13) s'étendant verticalement et deux surfaces latérales (14) s'étendant verticalement et délimitant latéralement la rainure de guidage (11), alors qu'une surface d'appui inférieure (15), une surface de base (16) de la rainure de guidage (11) ainsi que deux faces supérieures (17) du rail modulaire respectif (10) s'étendent horizontalement, dans lequel, respectivement une rainure de serrage (12) s'étendant entièrement le long des rails modulaires (10) est prévue dans les surfaces latérales situées à l'intérieur et à l'extérieur (13, 14) pour recevoir une nervure de serrage (26) réalisée de façon correspondante côté plaque de base,

3. Système de maintien et de fixation de conception modulaire (1) selon la revendication 1 ou 2, **caractérisé en ce que** la plaque de base respective (21) présente sur sa face inférieure (22) une entretoise (23) d'une largeur Y faisant saillie à partir de la face inférieure (22) de sorte que la plaque de base réalise deux gradins (24) entre l'entretoise (23) et la face inférieure (22).

4. Système de maintien et de fixation de conception modulaire (1) selon la revendication 3, **caractérisé en ce que** sur l'entretoise respective (23) de la plaque de base (21), un ou deux tasseaux de serrage (25) s'étendant transversalement par rapport à l'entretoise (23) est/sont prévu(s) qui réalise(nt) respectivement des nervures de serrage (26) faisant saillie au-delà de la largeur de l'entretoise côté extrémité et qui sont réalisées pour venir en prise dans respectivement une rainure de serrage (12) sur les surfaces latérales situées à l'intérieur ou à l'extérieur (13, 14).

5. Système de maintien et de fixation de conception modulaire (1) selon la revendication 3, **caractérisé en ce que** les rails modulaires (10) présentent à une distance Z par rapport à au moins une face frontale (10s) du rail modulaire concerné respectivement quatre évidements latéraux (17) dans respectivement une zone au-dessus des quatre rainures de serrage (12), qui sont réalisés de telle sorte que la plaque de base (21) peut être introduite par le haut par l'un de ses tasseaux de serrage (25) sélectivement dans une rainure de guidage (11) ou dans un intervalle entre respectivement deux rails modulaires (10) directement adjacents.

6. Système de maintien et de fixation de conception modulaire (1) selon l'une quelconque des revendications précédentes, **caractérisé en ce que** chaque rail modulaire (10) présente respectivement des deux côtés de la rainure de guidage (11) une pluralité d'ouvertures de positionnement (30a) pratiquées selon des dimensions modulaires X, et chaque plaque de base (21) présente à cet effet au moins une broche de positionnement (30) disposée dans la zone marginale (12a) correspondante et qui est réalisée pour venir en prise dans l'une des ouvertures de positionnement (30a).

7. Système de maintien et de fixation de conception modulaire (1) selon l'une quelconque des revendications précédentes, **caractérisé en ce que** les systèmes de maintien respectifs (20) sont coulissants de manière linéairement mobile le long des rails modulaires (10) avec leur plaque de base (16) dans une position de montage introduite dans ou entre des rails modulaires (10) correspondants, notamment tour à tour en alternance respectivement d'une position d'arrêt fixe à l'intérieur de la trame point zéro prédéfinie à respectivement une position intermédiaire à sélectionner librement.

8. Système de maintien et de fixation de conception modulaire (1) selon l'une quelconque des revendications précédentes, **caractérisé en ce que** chaque plaque de base (21) dispose d'au moins une, de préférence de deux vis de serrage centrales (33) qui sont disposées de façon à être actionnées contre ou dans des ouvertures correspondantes dans la surface de base (16) de la rainure de guidage (11) afin de serrer ainsi en position fixe le système de maintien (20) en question dans sa position de montage.

9. Système de maintien et de fixation de conception modulaire (1) selon l'une quelconque des revendications précédentes, **caractérisé en ce que** sur la plaque de base (21), une articulation rotative (40) à emmancher, pouvant être fixée en position angulaire et pourvue d'un logement (41) est montée au niveau d'une interface (42) réalisée pour un dispositif de maintien de pièce (50), les positions des interfaces (42) de respectivement une pluralité de systèmes de maintien (20) montés formant un plan de référence parallèle à la surface du plan de montage des rails modulaires (10).

10. Système de maintien et de fixation de conception modulaire (1) selon la revendication 9, **caractérisé en ce que** pour la fixation du dispositif de maintien de pièce (50), respectivement un adaptateur de montage (51) est prévu pour un montage par emboîtement dans le logement (41) de l'articulation rotative (40), l'adaptateur de montage (51) disposant de préférence d'un tirant (52) faisant saillie dans le logement (41) afin de fixer ledit adaptateur au tirant (52) par une vis de serrage (42) prévue sur l'articulation rotative.

11. Système de maintien et de fixation de conception modulaire (1) selon la revendication 10, **caractérisé en ce que** l'adaptateur de montage (51) dispose côté tête d'une bride de fixation (55) servant à la fixation amovible d'un dispositif de maintien de pièce (50) qui dispose de mâchoires de maintien mobile en va-et-vient afin de maintenir une partie d'une pièce entre celles-ci.

12. Table de mesure (100), présentant un système de maintien et de fixation de conception modulaire (1) selon l'une quelconque des revendications 1 à 11.
